# EUROPEAN PATENT SPECIFICATION

(11) **EP 3 955 623 B1**
(45) Date of publication and mention of the grant of the patent: **09.07.2025**
(21) Application number: 20788255.6
(22) Date of filing: 09.04.2020
(51) Int. Cl.: H04W 16/28, H04B 7/026, H04L 5/00

(54) **TERMINAL AND RADIO COMMUNICATION METHOD**
ENDGERÄT UND FUNKKOMMUNIKATIONSVERFAHREN
TERMINAL ET PROCÉDÉ DE COMMUNICATION RADIO

(30) Priority: 11.04.2019 JP 2019087881
(43) Date of publication of application: 16.02.2022
(73) Proprietor: NTT DOCOMO, INC., Chiyoda-Ku Tokyo 100-6150 (JP)
(72) Inventor: MATSUMURA, Yuki, Tokyo 1006150 (JP); NAGATA, Satoshi, Tokyo 1006150 (JP); GUO, Shaozhen, Beijing 100190 (CN); WANG, Jing, Beijing 100190 (CN)
(74) Representative: Hoffmann Eitle
(86) International application number: PCT/JP2020/015998
(87) International publication number: WO 2020/209342

(56) References cited:
- US-A1- 2019 082 456
- QUALCOMM INCORPORATED: "Beam management for NR", vol. RAN WG1, no. Chengdu, China; 20181008 - 20181012, 29 September 2018 (2018-09-29), XP051518632, Retrieved from the Internet <URL:http://www.3gpp.org/ftp/tsg%5Fran/WG1%5FRL1/TSGR1%5F94b/Docs/R1%2D1811231%2Ezip> [retrieved on 20180929]
- QUALCOMM INCORPORATED: "Beam management for NR", 3GPP DRAFT; R1-1811633 BEAM MANAGEMENT FOR NR, vol. RAN WG1, 30 September 2018 (2018-09-30), Chengdu, China, pages 1 - 13, XP051519027
- NTT DOCOMO; INC: "Enhancements on multi-TRP/panel transmission", 3GPP DRAFT; R1-1904966, vol. RAN WG1, 29 March 2019 (2019-03-29), Xi’an, China, pages 1 - 29, XP051691893
- ERICSSON: "Summary of views on beam measurement and reporting-v2", 3GPP TSG-RAN WG1 MEETING #95 TDOC R1-1814041, 14 November 2018 (2018-11-14), pages 1 - 13, XP051494491

## Description

### Technical Field

The present disclosure relates to a terminal and a radio communication method in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (e.g., referred to as "5th generation mobile communication system **(5G),"** "5G+ **(plus),"** "New Radio **(NR),"** "3GPP Rel. 15 (or later **versions),"** and so on) are also under study.

In existing LTE systems (e.g., LTE Rel. 8 to Rel. 14), a user terminal (UE (User Equipment)) controls reception of a downlink shared channel (e.g., a PDSCH (Physical Downlink Shared Channel)) on the basis of downlink control information (also referred to as "DCI," "DL assignment," and so on) communicated via a downlink control channel (e.g., a PDCCH (Physical Downlink Control Channel)). The user terminal controls transmission of an uplink shared channel (e.g., a PUSCH (Physical Uplink Shared Channel)) on the basis of the DCI (referred to as a "UL grant" and so on).

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

QUALCOMM INCORPORATED: "Beam management for NR", 3GPP DRAFT; R1-1811231 relates to discussions in the context of a 3GPP TSG-RAN WG1 Meeting regarding beam management for NR.

### Summary of Invention

### Technical Problem

For future radio communication systems (e.g., NR, 5G, 5G+, or Rel. 15 (or later versions)), performing communication by utilizing beam forming (BF) is under study. Thus, controlling, by a user terminal on the basis of information (QCL information) related to quasi-co-location (QCL) of at least one of a certain channel and a certain signal (expressed as a channel/signal), reception processing (e.g., at least one of demapping, demodulation, and decoding) of the channel/signal is under study.

The QCL information about a certain channel/signal (e.g., a PDSCH, a PDCCH, or the like) is also referred to as a transmission configuration indication (TCI (Transmission Configuration Indication or Transmission Configuration Indicator)) state (TCI state) for the certain channel/signal.

Incidentally, for the above-described future radio communication systems, repetitions of transmission of a downlink shared channel (e.g., a PDSCH) are under study. Transmission of the downlink shared channel from a plurality of different transmission and reception points (TRPs) for each certain number of repetitions (e.g., 1 repetition) is also under study.

However, when the downlink shared channel is transmitted from different TRPs for each certain number of repetitions, as a result of unavailability of appropriate acknowledgement of a TCI state for the downlink shared channel, the user terminal may not appropriately control reception of the downlink shared channel.

In view of this, an object of the present disclosure is to provide a user terminal and a radio communication method that can appropriately control, even when transmission of a downlink shared channel from different TRPs is performed repetitively, reception of the downlink shared channel.

### Solution to Problem

The object of the invention is achieved by the subject-matter of the independent claims. Advantageous embodiments are defined in the dependent claim. Further examples are provided for facilitating the understanding of the invention.

### Advantageous Effects of Invention

According to one aspect of the present disclosure, even when transmission of a downlink shared channel from different TRPs is performed repetitively, it is possible to appropriately control reception of the downlink shared channel.

### Brief Description of Drawings

FIGS. 1A and 1B are diagrams to show an example of repetitions of transmission of a channel/signal by using a plurality of TRPs;
FIGS. 2A and 2B are diagrams to show an example of TCI states associated with repetition indices according to a first aspect;
FIGS. 3A and 3B are diagrams to show an example of TCI states associated with RV indices p according to a second aspect;
FIG. 4A is a diagram to show an example of DCI indicating a TCI state ID for each repetition index k; FIG. 4B is a diagram to show an example of DCI indicating a TCI state ID for each RV index p;
FIG. 5 is a diagram to show an example of DCI indicating a single TCI state ID;
FIGS. 6A to 6D are diagrams to show examples of relationships between TCI states indicated by a TCI field and RVs indicated by an RV field;
FIGS. 7A and 7B are diagrams to show an example of correspondence between certain field values in DCI and TCI state sets according to a first example in a fourth aspect;
FIG. 8 is a diagram to show an example of a fifth example in the fourth aspect;
FIG. 9 is a diagram to show an example of a schematic structure of a radio communication system according to one embodiment;
FIG. 10 is a diagram to show an example of a structure of a base station according to one embodiment;
FIG. 11 is a diagram to show an example of a structure of a user terminal according to one embodiment; and
FIG. 12 is a diagram to show an example of a hardware structure of the base station and the user terminal according to one embodiment.

### Description of Embodiments

### (Repetitions of Transmission)

For future radio communication systems (e.g., NR, 5G, 5G+, or Rel. 15 (or later versions)), repetitions of transmission of at least one of a channel and a signal (a channel/signal) are under study. More specifically, repetitively performing transmission of the channel/signal by using a plurality of transmission and reception points (TRPs) is under study.

The channel/signal is, for example, a PDSCH, a PDCCH, a PUSCH, a PUCCH, a DL-RS, an uplink reference signal (UL-RS), or the like, but the present disclosure is not limited to this.

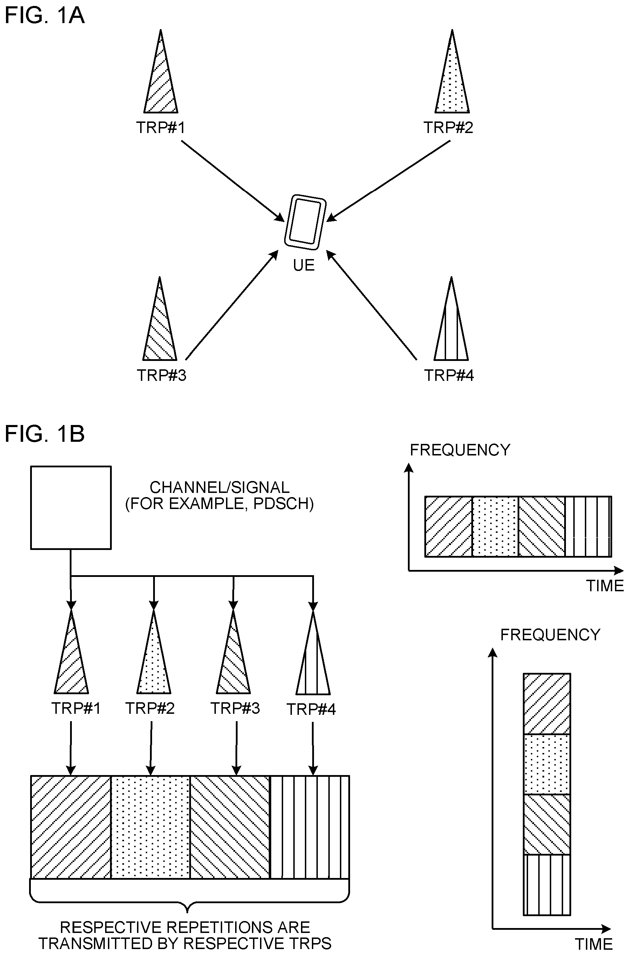

FIGS. 1A and 1B are diagrams to show an example of repetitions of transmission of the channel/signal using a plurality of TRPs. For example, FIGS. 1A and 1B show an example of repetitions of transmission of a PDSCH using TRPs #1 to #4. Note that although FIG. 1A shows an example in which geographical positions (TCI states) of TRPs #1 to #4 are different from each other, the present disclosure is not limited to this. TRPs #1 to #4 may be different antenna panels installed at the same transmission point. The number of TRPs used for the repetitions of the transmission is not limited to that of the illustrated TRPs.

As shown in FIG. 1B, the same PDSCH (which may be referred to as DL data, a transport block, a codeword, and so on) may be duplicated into the plurality of the TRPs, and the PDSCH may be transmitted as repetitions. Here, "duplicate DL data" may be duplication of at least one of a sequence of information bits, a code block, a codeword, a transport block, and a sequence of codewords after coding that constitute the DL data.

Alternatively, "duplicate DL data" may not necessarily denote duplication of all of the same bit string, and may be duplication of at least a part of codewords generated from the same information bit string or at least a part of a sequence of modulation symbols. For example, as between a plurality of pieces of duplicated DL data, codeword RVs obtained by coding some certain sequences of information bits may be the same or different from each other. Alternatively, the plurality of pieces of the duplicated DL data may be a sequence of modulation symbols obtained by modulating the different RVs or the same RVs. Each of the plurality of pieces of the duplicated DL data is transmitted as a PDSCH. The PDSCH may be transmitted repetitively in a resource in which at least one of time domains and frequency domains is different from each other.

For example, as shown in FIG. 1B, the PDSCH may be repeated in resources (e.g., one or more slots) with the same frequency domain that are consecutive in the time domain. Alternatively, the PDSCH may be repeated in resources (e.g., one or more resource blocks (RBs) or an RB group (RBG) including one or more RBs) with the same time domain that are consecutive in the frequency domain. Each repetition may be transmitted to different TRPs.

Note that although FIG. 1B shows a case where a plurality of resources corresponding to different repetitions is consecutive in the time domain or frequency domain, the plurality of the resources may not be consecutive. The plurality of the resources may be resources in which both of time domains and frequency domains are different from each other.

Although FIG. 1B shows a case where the PDSCH is transmitted to different TRPs for each 1 repetition, the present disclosure is not limited to this, and the PDSCH may be transmitted to different TRPs for each certain number of repetitions (1 or more repetitions).

Note that the term "TRP" may be rephrased as a network, a radio base station, an antenna apparatus, an antenna panel, a serving cell, a cell, a component carrier (CC), a carrier, and so on. With respect to different transmission and reception signals or channels, the phrase "TRPs are the same" may be rephrased as "as between the different transmission and reception signals or channels or reference signals for those, a TCI state, QCL, or a QCL relationship is the same." With respect to different transmission and reception signals or channels, the phrase "TRPs are different" may be rephrased as "as between the different transmission and reception signals or channels or reference signals for those, a TCI state, QCL, or a QCL relationship is different."

Note that repetitions of the PDSCH (repetitions of transmission) in the present disclosure may be interpreted as multiple (a plurality of) PDSCHs (single slot PDSCHs) in a single slot, and may be interpreted as a PDSCH (multi-slot PDSCH) over multiple slots (a plurality of different slots).

Repetitions of the PDSCH in the present disclosure may be scheduled by one piece of DCI (in other words, a single PDCCH) notified from one TRP, or may be scheduled by a plurality of pieces of DCI (in other words, multiple PDCCHs) notified from one or a plurality of TRPs.

### (QCL)

For the future radio communication systems, controlling, by a user terminal on the basis of information (QCL information) related to quasi-co-location (QCL) of at least one of a certain channel and a certain signal (a channel/signal), reception processing (e.g., at least one of demapping, demodulation, and decoding) of the channel/signal is under study.

Here, QCL is an indicator indicating statistical properties of the channel/signal. For example, when a certain signal and another signal are in a relationship of QCL, it may be indicated that it is assumable that at least one of Doppler shift, a Doppler spread, an average delay, a delay spread, and a spatial parameter (for example, a spatial reception parameter (spatial Rx parameter)) is the same (the relationship of QCL is satisfied in at least one of these) between such a plurality of different signals.

Note that the spatial reception parameter may correspond to a receive beam of the user terminal (e.g., a receive analog beam), and the beam may be identified on the basis of spatial QCL. The QCL and at least one element in the QCL in the present disclosure may be interpreted as sQCL (spatial QCL).

For the QCL, a plurality of types (QCL types) may be defined. For example, four QCL types A to D may be provided, which have different parameter(s) (or parameter set(s)) that can be assumed to be the same, and such parameter(s) are described below:
- QCL type A: Doppler shift, Doppler spread, average delay, and delay spread
- QCL type B: Doppler shift and Doppler spread
- QCL type C: Doppler shift and Average delay
- QCL type D: Spatial reception parameter

A transmission configuration indication (TCI (Transmission Configuration Indication or Transmission Configuration Indicator)) state (TCI state (TCI-state)) may indicate (include) QCL information about a certain channel/signal (e.g., a PDSCH, a PDCCH, a PUCCH, a PUSCH, or the like).

The TCI state may indicate (include) information (QCL information (QCL-Info)) related to QCL between a channel/signal as a target (or a reference signal for the channel (or an antenna port for the reference signal)) identified by a certain identifier (TCI state ID (TCI-StateId)) and another signal (e.g., another downlink reference signal (DL-RS)).

The QCL information may include, for example, at least one of information (DL-RS-related information) related to a DL-RS in QCL relationship with a channel/signal as a target, information indicating the QCL type (QCL type information), and information related to a carrier (cell) and a BWP on which the DL-RS is arranged.

The DL-RS-related information may include information indicating at least one of a DL-RS in QCL relationship with a channel/signal as a target and a resource for the DL-RS. For example, when a plurality of reference signal sets (RS sets) is configured for the user terminal, the DL-RS-related information may indicate at least one of a DL-RS having a QCL relationship with a channel (or a port for the channel) out of RSs included in the RS sets, a resource for the DL-RS, and the like.

Here, the DL-RS may be, for example, at least one of a synchronization signal (SS), a broadcast channel (PBCH (Physical Broadcast Channel)), a synchronization signal block (SSB), a mobility reference signal (MRS (Mobility RS)), a channel state information reference signal (CSI-RS (Channel Satate Information-Reference Signal)), a CSI-RS for tracking, a beam-specific signal, and the like, or may be a signal constituted by, for example, expanding or changing these signals (e.g., a signal constituted by changing at least one of density and periodicity).

The synchronization signal may be, for example, at least one of a primary synchronization signal (PSS) and a secondary synchronization signal (SSS). The SSB is a signal block including the synchronization signal and the broadcast channel, and may be referred to as an SS/PBCH block and so on.

### <TCI State for PDCCH>

A TCI state for a PDCCH may include QCL information related to QCL of the PDCCH. Specifically, the TCI state may include QCL information related to QCL between a demodulation reference signal (DMRS), (antenna port for the DMRS (DMRS port) or group of the DMRS ports (DMRS port group)) for the PDCCH and the above-described DL-RS.

One or more TCI states may be configured for each control resource set (CORESET) configured for the user terminal. When one or more TCI states are configured for each 1 CORESET, a single TCI state may be activated.

The user terminal may determine QCL related to the PDCCH on the basis of a TCI state that is associated with the CORESET (or activated). Specifically, the user terminal may assume that a DMRS (DMRS port or DMRS port group) for the PDCCH is QCL with a DL-RS corresponding to the TCI state, and may control reception processing (e.g., decoding, demodulation, and the like) of the PDCCH.

Note that at least one of a configuration and activation of one or more TCIs is performed by higher layer signaling. The higher layer signaling may be, for example, any one or combinations of RRC (Radio Resource Control) signaling, MAC (Medium Access Control) signaling, broadcast information, and the like.

The MAC signaling may use, for example, a MAC control element (MAC CE), a MAC PDU (Protocol Data Unit), and the like. For example, the broadcast information may be master information blocks (MIBs), system information blocks (SIBs), minimum system information (RMSI (Remaining Minimum System Information)), and the like.

For example, a configuration of one or more TCI states for each CORESET may be performed by an RRC control element "TCI-StatesPDCCH." Activation or deactivation of the configured TCI state may be controlled by the MAC CE.

A certain number (e.g., 3 or less) of CORESETs may be configured for each bandwidth part (BWP) that is configured for the user terminal in a serving cell.

Here, the BWP is a partial band configured in a carrier (referred to as a cell, a serving cell, a component carrier (CC), and so on), and is referred to as a partial band and so on. The BWP may have a BWP (UL BWP, uplink BWP) for an uplink (UL) and a BWP (DL BWP, downlink BWP) for a downlink (DL). Each BWP to which the above-described certain number of CORESETs are given may be the DL BWP.

A search space including one or more PDCCH candidates may be associated with the CORESETs. One or more search spaces may be associated for each CORESET. The user terminal may monitor the search space to detect the PDCCH (DCI).

A PDCCH candidate is a resource unit to which one PDCCH is mapped, and may be constituted with, for example, control channel elements (CCEs) whose number depends on an aggregation level. The search space may include PDCCH candidates whose number depends on an aggregation level.

Note that in the present disclosure, "monitoring a CORESET," "monitoring a search space (or an SS set)," "monitoring a PDCCH candidate (or a set (PDCCH candidate set) of one or more PDCCH candidates)," "monitoring a downlink control channel (e.g., a PDCCH)," and "monitoring downlink control information (DCI)" may be interchangeably interpreted. "Monitoring" may be interpreted as "at least one of blind decoding and blind detection."

### <TCI State for PDSCH>

A TCI state for a PDSCH may include QCL information related to QCL of the PDSCH. Specifically, the TCI state may include QCL information related to QCL between a DMRS for the PDSCH or a port for the DMRS and the above-described DL-RS.

M (M ≥ 1) pieces of TCI states (M pieces of QCL information for the PDSCH) for the PDSCH may be notified to (configured for) the user terminal by higher layer signaling. Note that the number M of the TCI states configured for the user terminal may be limited by at least one of a capability of the user terminal (UE capability) and a QCL type.

DCI used for scheduling of the PDSCH may include a certain field (which may be referred to as, for example, a field for TCI, a TCI field, a TCI state field, and so on) indicating a TCI state (QCL information for the PDSCH). The DCI may be used for scheduling of a PDSCH in one cell, and may be referred to as, for example, DL DCI, DL assignment, DCI format 1_0, DCI format 1_1, and so on.

The TCI field may be constituted with a certain number of bits (e.g., 3 bits). Information notified to the UE from a base station may control whether the TCI field is included in the DCI. The information may be information (which may be referred to as, for example, TCI presence information, TCI presence information in DCI, a higher layer parameter TCI-PresentInDCI, and so on) indicating whether a TCI field is present or absent in DCI. TCI-PresentInDCI may be, for example, configured for the user terminal by higher layer signaling (an RRC information element (IE)).

When the DCI includes an x-bits (e.g., x = 3) TCI field, the base station may configure, at most, 2x (e.g., 8 when x = 3) kinds of TCI states for the user terminal beforehand by the higher layer signaling. A value of the TCI field (TCI field value) in the DCI may indicate one of the TCI states configured beforehand by the higher layer signaling.

When 8 or more kinds of TCI states are configured for the user terminal, 8 or less kinds of TCI states may be activated (specified) by using a MAC CE. The value of the TCI field in the DCI may indicate one of the TCI states activated by the MAC CE.

The user terminal may determine QCL related to the PDSCH on the basis of a TCI state indicated by the TCI field value in the DCI. Specifically, the user terminal may assume that a DMRS (DMRS port or DMRS port group) for the PDSCH is QCL with a DL-RS corresponding to a TCI state notified by the DCI, and may control reception processing **(e.g.,** decoding, demodulation, and the like) of the PDSCH.

When TCI-PresentInDCI for a CORESET to schedule the PDSCH is enabled, the user terminal may assume that the TCI field is present (included) in DL DCI for a PDCCH transmitted in the CORESET.

When TCI-PresentInDCI for a CORESET to schedule the PDSCH is disabled or the PDSCH is scheduled by DCI format 1_0, the user terminal may assume, in a determination of QCL of an antenna port for the PDSCH, that a TCI state for the PDSCH is identical to a TCI state applied to the CORESET used for the PDCCH transmission. Note that an antenna port (port) in the present disclosure may be interpreted as an antenna port group (port group).

Incidentally, as shown in the above-described FIGS. 1A and 1B, when the PDSCH is transmitted from different TRPs for each certain number of repetitions, depending on a geographical relationship between each of the different TRPs and the user terminal, the TCI state for the PDSCH is assumed to be different for each certain number of repetitions.

However, in the above-mentioned method for notification of the TCI state for the PDSCH, the case that the PDSCH is transmitted from different TRPs for each certain number of repetitions is not assumed, and thus the user terminal may not appropriately acknowledge the TCI state for the PDSCH for each certain number of repetitions.

Thus, the inventors of the present invention came up with the idea of associating the TCI state with repetitions of the PDSCH (a first aspect) or a redundancy version of the PDSCH (a second aspect) in order to allow the user terminal to appropriately control reception of the PDSCH even when the PDSCH is transmitted from different TRPs for each certain number of repetitions.

Embodiments according to the present disclosure will be described in detail below with reference to the drawings. Although the following description describes an example in which a PDSCH is transmitted from different TRPs for each 1 repetition, as mentioned above, it is only required that the PDSCH is transmitted by different TRPs for each certain number of repetitions (1 or more repetitions).

Each aspect of the present disclosure is not limited to a case where multiple TRPs are used, and may be employed in a case (case of a single TRP) where multiple TRPs are not used.

Although the following description mainly describes an example in which repetitions of transmission of the PDSCH are performed in resources in different time domains, as mentioned above, it is only required that repetitions of transmission of the PDSCH are performed in resources in which at least one of time domains and frequency domains is different from each other. For example, repetitions in a time-domain direction of aspects below may be interpreted as at least one of repetitions in a frequency-domain direction, repetitions in time- and frequency-domain directions, and so on.

In the following, the phrase "transmit a plurality of channels/signals from different TRPs" has the same meaning as a TCI state (referred to as QCL and QCL information) being different among the plurality of the channels/signals. When receiving a plurality of channels/signals with different TCI states, the user terminal may assume that the plurality of the channels/signals is transmitted from different TRPs. Accordingly, the phrase "receive channels/signals transmitted from different transmission and reception points for each certain number of repetitions" has the same meaning as receiving channels/signals with different TCI states (referred to as QCL and QCL information) for each certain number of repetitions.

### (First Aspect)

In a first aspect, the user terminal controls, on the basis of a TCI state associated with a certain number of repetitions (e.g., 1 repetition) of a PDSCH, reception of the PDSCH. Specifically, the user terminal may assume that one or more antenna ports for a DMRS for the PDSCH are quasi co-located with a DL-RS indicated by the TCI state.

Repetitions of the PDSCH may be identified by a certain index (repetition index) k. Repetition index k may indicate how many times the repetitions has been performed. For example, repetition indices k = 0, 1, 2, ..., K-1 may indicate the first, second, third, ..., K-th repetition.

A total number of repetitions of the PDSCH may be referred to as repetition factor K. Although repetition factor K is set to, for example, 2, 4, or 8, the present disclosure is not limited to this.

At least one of above-described repetition indices k and repetition factor K may be transmitted to the user terminal by at least one of higher layer signaling (e.g., RRC signaling, a MAC CE, and the like) and physical layer signaling (e.g., DCI).

When the PDSCH is transmitted from different TRPs for each certain number of repetitions, the TCI state may be associated with the certain number of repetitions (e.g., 1 repetition), or may be associated with repetition index k indicating the certain number of repetitions.

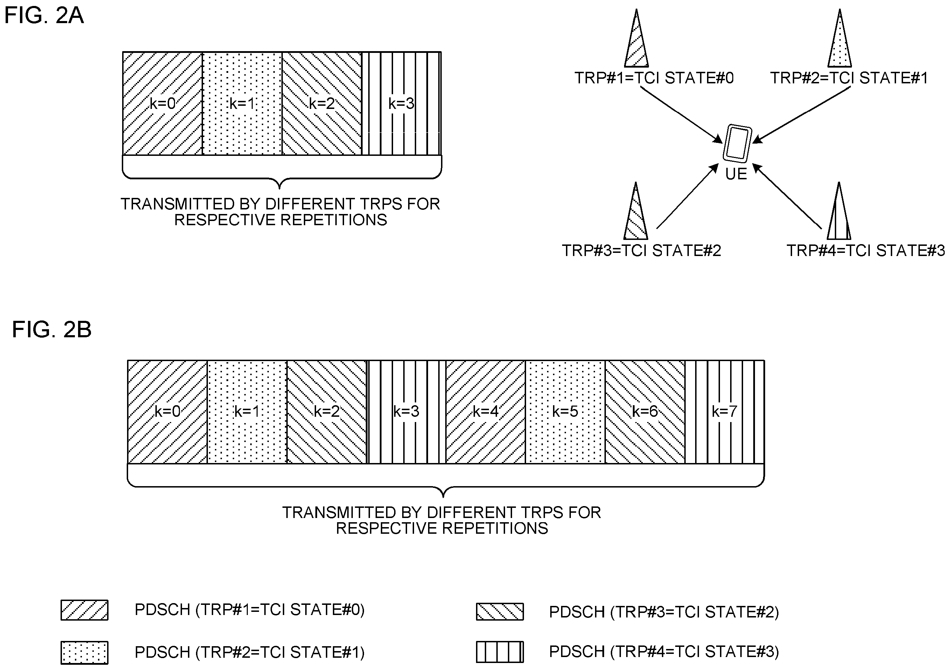

FIGS. 2A and 2B are diagrams to show an example of the TCI states associated with the repetition indices according to the first aspect. Although a case where repetition factor K is 4 and 8 is assumed in FIGS. 2A and 2B, respectively, a value of repetition factor K is not limited to this.

In FIGS. 2A and 2B, Y pieces of TCI states is assumed to be configured for (notified from a TRP to) the user terminal by the higher layer signaling. Note that a TCI state or a TCI state ID in the present disclosure may be interchangeably interpreted as a TRP (or a TRP ID), an RS (or an RS index), a QCL assumption (or a QCL assumption ID), and so on.

As shown in FIGS. 2A and 2B, repetition indices k (k = 0, 1, 2, ..., K-1) may be associated with a certain TCI state identifier (TCI state ID) y. Specifically, repetition indices k may be associated with a remainder (y mod Y) in division of TCI state ID y by a total number Y of TCI states configured for the user terminal.

For example, in FIG. 2A, repetition indices k = 0, 1, 2, 3 are associated with TCI state IDs y = 0, 1, 2, 3, respectively. The PDSCH with repetition indices k = 0, 1, 2, 3 are transmitted from TRPs #1, #2, #3, #4 corresponding to TCI state IDs y = 0, 1, 2, 3, respectively.

In FIG. 2B, repetition indices k = 0, 1, 2, 3, 4, 5, 6, 7 are associated with TCI state IDs y = 0, 1, 2, 3, 0, 1, 2, 3, respectively. The PDSCH with repetition indices k = 0, 1, 2, 3, 4, 5, 6, 7 are transmitted from TRPs #1, #2, #3, #4, #1, #2, #3, #4 corresponding to TCI state IDs y = 0, 1, 2, 3, 0, 1, 2, 3, respectively.

Note that information indicating a TCI state ID corresponding to repetition index k may be notified from a TRP to the user terminal by at least one of higher layer signaling (e.g., RRC signaling, a MAC CE, and the like) and physical layer signaling (e.g., DCI). Alternatively, the user terminal may derive the TCI state ID corresponding to repetition index k on the basis of repetition index k, above-described total number Y of the TCI states, and the like.

Although different TCI state IDs (TRPs) is assumed to be associated with each repetition index k in FIGS. 2A and 2B, the present disclosure is not limited to this. At least a part of repetitions within repetition factor K may be associated with different TCI state IDs (TRPs). In other words, at least a part of repetitions within repetition factor K may be associated with an identical TCI state ID (TRP).

In FIGS. 2A and 2B, an RV (a value of RV index p) for each repetition within repetition factor K may be fixed, or may be cycled in accordance with a certain sequence.

In the first aspect, the TCI states are associated with repetitions of the PDSCH (or repetition indices k), thereby allowing the user terminal to appropriately control reception of the PDSCH even when the PDSCH is transmitted from different TRPs for each certain number of repetitions.

### (Second Aspect)

In a second aspect, the user terminal controls, on the basis of a TCI state associated with a redundancy version (RV) of a PDSCH, reception of the PDSCH. In the second aspect, differences from the first aspect will be mainly described.

The RV of the PDSCH may be fixed during K times of repetitions, or may be cycled in accordance with a certain sequence (e.g., an order of 0, 2, 3,1). The RV may be identified by a certain index (RV index) p.

When the PDSCH is transmitted from different TRPs for each certain number of repetitions, the TCI state may be associated with an RV, or may be associated with RV index p indicating the RV.

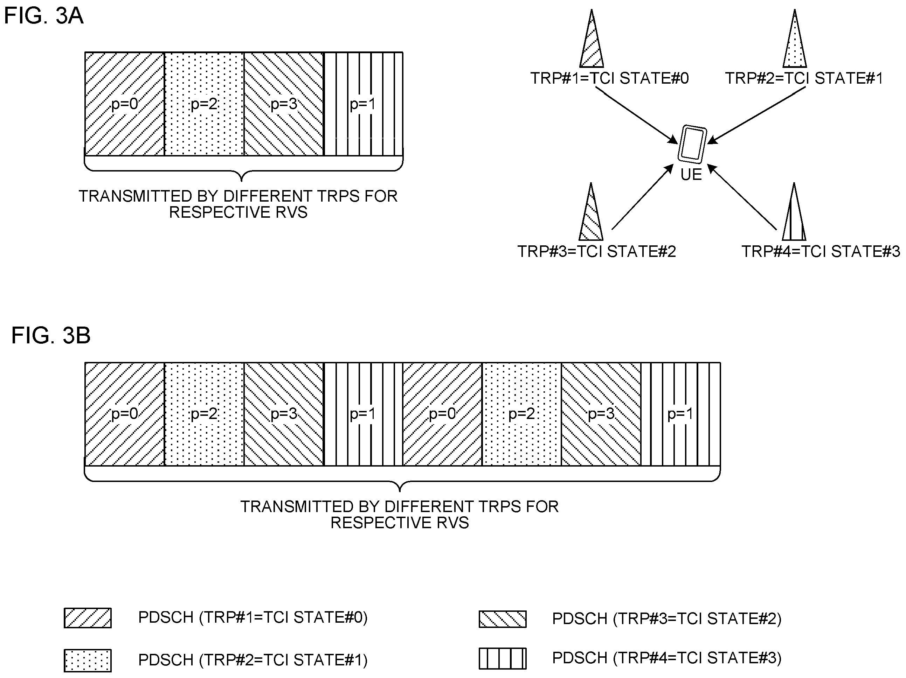

FIGS. 3A and 3B are diagrams to show an example of the TCI states associated with RV indices p according to the second aspect. In FIGS. 3A and 3B, descriptions of similarities to FIGS. 2A and 2B will be omitted, and differences from FIGS. 2A and 2B will be mainly described.

As shown in FIGS. 3A and 3B, RV index p may be associated with certain TCI state identifier (TCI state ID) y (or a TCI state of the TCI state ID). For example, RV index p may be associated with a remainder (y mod Y) in division of TCI state ID y by total number Y of TCI states configured for the user terminal.

For example, in FIG. 3A, RV indices p = 0, 2, 3, 1 are associated with TCI state IDs y = 0, 1, 2, 3, respectively. The PDSCH with RV indices p = 0, 2, 3, 1 are transmitted from TRPs #1, #2, #3, #4 corresponding to TCI state IDs y = 0, 1, 2, 3, respectively.

In FIG. 3B, RV indices are cycled in order of certain sequence (e.g., an order of 0, 2, 3, 1), and thus RV indices p with repetition indices k = 0, 1, 2, 3, 4, 5, 6, 7 are p = 0, 1, 2, 3, 0, 1, 2, 3, respectively. In FIG. 3B, the PDSCH with RV indices p = 0, 2, 3, 1 are transmitted from TRPs #1, #2, #3, #4 corresponding to TCI state IDs y = 0, 1, 2, 3, respectively.

Note that information indicating a TCI state ID corresponding to RV index p may be notified from a TRP to the user terminal by at least one of higher layer signaling (e.g., RRC signaling, a MAC CE, and the like) and physical layer signaling (e.g., DCI). Alternatively, the user terminal may derive the TCI state ID corresponding to RV index p on the basis of RV index p, above-described total number Y of the TCI states, and the like.

Although different TCI state IDs (TRPs) is assumed to be associated with each RV index p in FIGS. 3A and 3B, the present disclosure is not limited to this. At least a part of RVs within repetition factor K may be associated with different TCI state IDs (TRPs). In other words, at least a part of RVs within repetition factor K may be associated with an identical TCI state ID (TRP).

In the second aspect, the TCI states are associated with RVs (or RV indices p), thereby allowing the user terminal to appropriately control reception of the PDSCH even when the PDSCH is transmitted from different TRPs for each certain number of repetitions.

### (Third Aspect)

In a third aspect, DCI indicating a TCI state associated with repetition index k (repetitions) or RV index p (RV) in the first or second aspect will be described.

### <First Example>

The user terminal may receive DCI for scheduling the PDSCH in all repetitions. A certain field value in the DCI may indicate a TCI state for each repetition index k or RV index p.

The certain field may be referred to as a TCI field, a TCI state field, a field for a TCI state, a first field, and so on. The certain field may be included in a case where a certain information (e.g., tci-PresentInDCI) is specified by higher layer signaling. The certain field may be constituted with a certain number of bits (e.g., 3 bits).

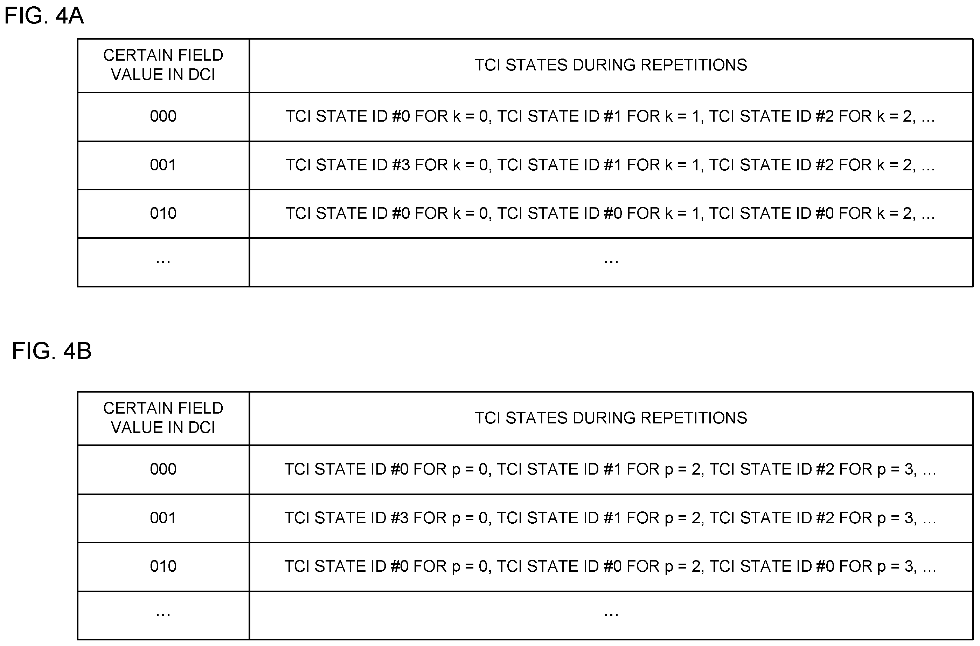

In a first example, the certain field value in the DCI may indicate one or more TCI state IDs. FIG. 4A is a diagram to show an example of DCI indicating a TCI state ID for each repetition index k. FIG. 4B is a diagram to show an example of DCI indicating a TCI state ID for each RV index p; Note that FIGS. 4A and 4B are just illustrative examples, and the number of bits, a value, a TCI state ID indicated by the value, and the like of the certain field in the DCI are not limited to those illustrated in FIGS. 4A and 4B.

As shown in FIG. 4A, each value of the certain field in the DCI may indicate a TCI state ID for each repetition index k within repetition factor K. For example, in FIG. 4A, a single value of the certain field indicates a TCI state ID for each repetition index k within repetition factor K (e.g., when the value is "000," TCI state ID #0 for k = 0, TCI state ID #1 for k = 1, TCI state ID #2 for k = 2, ...).

On the other hand, as shown in FIG. 4B, each value of the certain field in the DCI may indicate a TCI state ID for each RV index p within repetition factor K. For example, in FIG. 4B, a single value of the certain field indicates a TCI state ID for each RV index p within repetition factor K (e.g., when the value is "000," TCI state ID #0 for p = 0, TCI state ID #1 for p = 2, TCI state ID #2 for p = 3, ...).

As shown in FIGS. 4A and 4B, in a case where a single piece of DCI schedules all repetitions of the PDSCH with repetition factor K, the user terminal can acknowledge a TCI state for each repetition or RV within repetition factor K on the basis of a certain field value in the DCI.

Note that in a case shown in FIGS. 4A and 4B, another field indicating repetition factor K may be included in the DCI. Alternatively, repetition factor K may be indicated by the above-described certain field value. For example, the user terminal may determine a maximum value of repetition index k added by 1 as repetition factor K.

### <Second Example>

Alternatively, the user terminal may receive DCI that schedules the PDSCH for each certain number of repetitions (e.g., 1 repetition). A certain field value in the DCI may indicate the TCI state for each certain number of repetitions.

In a second example, the certain field value in the DCI may indicate a single TCI state ID. For example, when the DCI is transmitted for each repetition index k, a TCI state ID for repetition index k scheduled by the DCI may be indicated by the certain field value in the DCI.

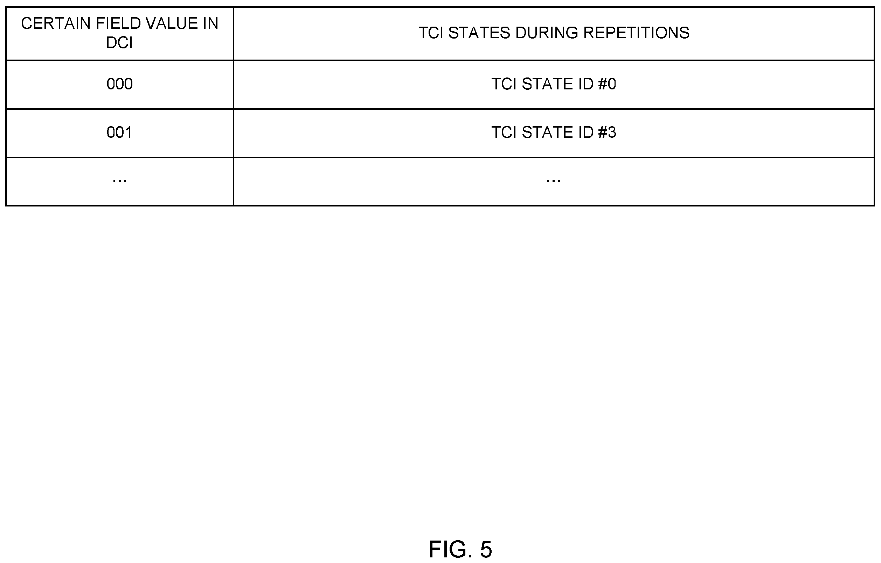

FIG. 5 is a diagram to show an example of DCI indicating the single TCI state ID. For example, in FIG. 5, a single piece of DCI may be used for scheduling of the PDSCH with certain repetition index k. In this case, the certain field in the DCI may indicate a TCI state ID for the certain repetition index k.

Alternatively, a single piece of DCI may be used for scheduling of the PDSCH with certain RV index p. In this case, the certain field in the DCI may indicate a TCI state ID for the certain RV index p.

### <Others>

In addition to the above-mentioned TCI field, a certain field (also referred to as, for example, a second field, an RV field, an RV index field, and so on) indicating an RV index (or an RV) may be included in the DCI. The RV field may be constituted with a certain number of bits (e.g., 2 bits).

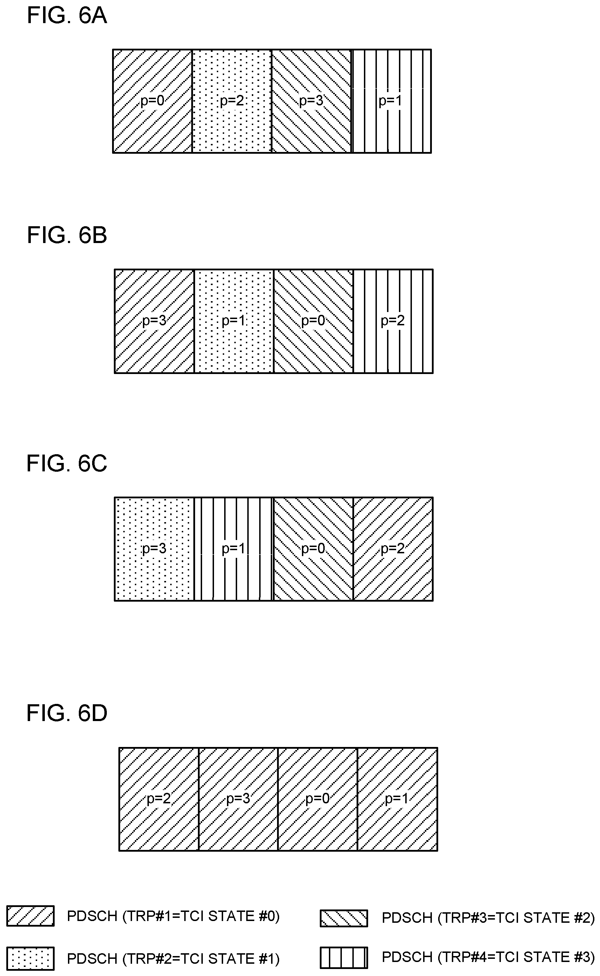

FIGS. 6A to 6D are diagrams to show examples of relationships between TCI states indicated by the TCI field and RVs indicated by the RV field. For example, although FIGS. 6A to 6D show a case where repetition factor K is 4, the present disclosure is not limited to this.

In FIGS. 6A to 6D, the PDSCH with repetition factor K may be scheduled by a single piece of DCI, or may be scheduled by DCI for each repetition index k.

In FIG. 6A, TCI state IDs = 0, 1, 2, 3 for each of repetition indices k = 0, 1, 2, 3 may be indicated by a value of the TCI field (e.g., FIG. 4A, FIG. 5) in the DCI. On the other hand, RV index 0 is indicated by a value of the RV field in the DCI, and thus RV indices p = 0, 2, 3, 1 for repetition indices k = 0, 1, 2, 3 may be indicated, respectively, in accordance with a certain sequence.

In FIG. 6B, a TCI state ID for each repetition index k is indicated similarly to that of FIG. 6A. On the other hand, RV index 3 is indicated by a value of the RV field in the DCI, and thus RV indices p = 3, 1, 0, 2 for each of repetition indices k = 0, 1, 2, 3 may be indicated in accordance with a certain sequence.

In FIG. 6C, TCI state IDs = 1, 3, 2, 0 for each of repetition indices k = 0, 1, 2, 3 may be indicated by a value of the TCI field (e.g., FIG. 4A, FIG. 5) in the DCI. An RV index for each repetition index k is indicated similarly to that of FIG. 6B.

In FIG. 6D, a TCI state ID = 0 that is identical across repetition indices k = 0, 1, 2, 3 may be indicated by a value of the TCI field (e.g., FIG. 4A, FIG. 5) in the DCI. RV index 2 is indicated by a value of the RV field in the DCI, and thus RV indices p = 2, 3, 1, 0 for repetition indices k = 0, 1, 2, 3 may be indicated, respectively, in accordance with a certain sequence.

As described above, the RV indices (RV sequence) and the TCI states may be associated with each other, and may be specified by separate fields.

In the third aspect, the TCI states associated with repetitions of the PDSCH or RVs are indicated by the certain field value of the DCI, thereby allowing the user terminal to appropriately control reception of the PDSCH even when the PDSCH is transmitted from different TRPs for each certain number of repetitions.

### (Fourth Aspect)

Although a case where the UE can support TCI switching for the PDSCH (beam switching) is described in each aspect mentioned above, depending on a UE capability, there is a case where the UE cannot switch TCI for the PDSCH (cannot change a QCL assumption). Management of this case will be described in a fourth aspect.

Firstly, existing NR specifications will be described. In existing Rel-15 NR, when TCI presence information to which "enabled" is set is configured with respect to a CORESET (CORESET that schedules a PDSCH and that is used for PDCCH transmission) to schedule a PDSCH, a UE may assume that a TCI field is present in DCI format 1_1 for a PDCCH transmitted on the CORESET.

In the existing Rel-15 NR, when the TCI presence information is not configured with respect to a CORESET to schedule a PDSCH or the PDSCH is scheduled by DCI format 1_0, and time offset between reception of DL DCI (DCI to schedule the PDSCH) and reception of a PDSCH corresponding to the DCI is equal to or greater than a certain threshold value, in order to determine QCL of a PDSCH antenna port, the UE may assume that a TCI state or QCL assumption for the PDSCH is identical to a TCI state or QCL assumption applied to a CORESET that schedules the PDSCH and that is used for PDCCH transmission.

In the existing Rel-15 NR, when the TCI presence information is set to "enabled," and the TCI field in DCI in a component carrier (CC) to schedule (a PDSCH) indicates an activated TCI state in a CC or DL BWP to be scheduled and the PDSCH is scheduled by DCI format 1_1, in order to determine QCL of the PDSCH antenna port, the UE may use TCI that is in accordance with a value of the TCI field in a detected PDCCH including DCI. When time offset between reception of DL DCI (to schedule the PDSCH) and a PDSCH corresponding to the DCI (PDSCH scheduled by the DCI) is equal to or greater than a certain threshold value, the UE may assume that a DM-RS port for the PDSCH in a serving cell is QCL with an RS in TCI state related to a QCL type parameter given by a specified TCI state.

In the existing Rel-15 NR, when a single slot PDSCH is configured for the UE, the specified TCI state may be based on an activated TCI state in a slot including the scheduled PDSCH.

In the existing Rel-15 NR, when a multi-slot PDSCH is configured for the UE, the specified TCI state may be based on an activated TCI state in the first slot including the scheduled PDSCH, and the UE may expect that the specified TCI state is identical across slots including the scheduled PDSCH.

When a CORESET associated with a search space set for cross-carrier scheduling is configured for the UE, the TCI presence information is set to "enabled" with respect to the CORESET for the UE, and when at least one of TCI states configured with respect to a serving cell scheduled by the search space set includes QCL type D, the UE may assume that time offset between a detected PDCCH and a PDSCH corresponding to the PDCCH is equal to or greater than a certain threshold value.

In both a case where TCI information in DCI (higher layer parameter TCI-PresentInDCI) is set to "enabled" in an RRC connection mode and a case where the TCI information in DCI is not configured in the RRC connection mode, when time offset between reception of DL DCI (DCI to schedule a PDSCH) and a corresponding PDSCH (PDSCH scheduled by the DCI) is less than a certain threshold value, the UE may assume that a DM-RS port for the PDSCH in a serving cell is QCL with an RS related to a QCL parameter used for QCL indication of a PDCCH of a CORESET that is associated with a monitored search space and includes the lowest (minimum) CORESET-ID D in the latest (most recent) slot in which one or more CORESETs in an active BWP for the serving cell are monitored by the UE.

The time offset between reception of DL DCI and reception of a PDSCH corresponding to the DCI may be referred to as scheduling offset.

The above-described certain threshold value may be referred to as "Threshold," "Threshold for offset between a DCI indicating a TCI state and a PDSCH scheduled by the DCI," "Threshold-Sched-Offset," "timeDurationForQCL," a schedule offset threshold value, a scheduling offset threshold value, a time length for QCL, and so on.

The time length for QCL may be based on a UE capability, and may be based on, for example, a delay in decoding of a PDCCH and beam switching. Information about the scheduling offset threshold value may be configured by using higher layer signaling from a base station, or may be transmitted from the UE to the base station.

For example, the UE may assume that the DMRS port for the PDSCH is QCL with a DL-RS based on a TCI state activated with respect to the CORESET corresponding to the lowest CORESET-ID. The latest slot may be, for example, a slot for receiving the DCI to schedule the above-described PDSCH.

Note that the CORESET-ID may be an ID (ID for CORESET identification) configured by an RRC information element "ControlResourceSet."

A QCL assumption (QCL assumption corresponding to the lowest CORESET-ID in the latest slot, as mentioned above) used in a case where the scheduling offset is less than the time length for QCL may be referred to as a default QCL assumption.

Considering the above description, according to the existing Rel-15 NR specifications, satisfying at least one of conditions below causes the UE to perform reception processing by assuming that identical TCI or QCL (e.g., TCI state ID #0) is applied to repetitions of transmission of a PDSCH:
(1) an interval between DCI and the first PDSCH in the repetitions is less than the above-described certain threshold value (that is, the scheduling offset is less than the time length for QCL),
(2) the repetitions of the PDSCH are scheduled by DCI format 1_0, and
(3) the TCI presence information is not set to "enabled" (TCI presence information is not configured) with respect to a CORESET to schedule the repetitions of the PDSCH.

However, assuming an identical TCI state for all repetitions of the PDSCH is not preferable from the viewpoint of improvement in reception quality. Accordingly, description is given below about a method for assuming different TCI states for repetitions of transmission of the PDSCH even when at least one of the above-described (1) to (3) is satisfied.

Note that in examples below, the phrase "when the scheduling offset according to repetitions of transmission of the PDSCH is less than the time length for QCL" may be interpreted as at least one of the above-described conditions (2) and (3).

Note that in examples below, the scheduling offset may be interpreted as time offset between reception of DL DCI to schedule PDSCH repetitions and reception of the PDSCH in a specific repetition (e.g., the first repetition, the last repetition, or k th repetition) out of PDSCH repetitions corresponding to the DCI.

Examples below may be used separately, or may be used in combination with each other (at the same time).

### <First Example>

The above-mentioned third aspect describes a method for notifying a TCI state for each repetition index k by using a value of a certain field (e.g., a TCI field) in DCI.

Here, the method is slightly modified, and a set of a TCI state for each repetition index k is configured for the UE by higher layer signaling. In a first example, when the scheduling offset according to repetitions of transmission of the PDSCH is less than the time length for QCL, a certain TCI state set is applied to the repetitions of the transmission of the PDSCH. The certain TCI state set may be referred to as a default TCI state set.

Each TCI state set associated with a TCI state set ID for identification of the set may be configured for the UE. Note that as mentioned earlier, a TCI state or a TCI state ID in the present disclosure may be interchangeably interpreted as a TRP (or a TRP ID), an RS (or an RS index), a QCL assumption (or a QCL assumption ID), and so on. In other words, the TCI state set may be interpreted as a TRP set and so on.

The above-mentioned certain TCI state set may be a TCI state set corresponding to a specific TCI state set ID (e.g., the lowest ID or the highest ID).

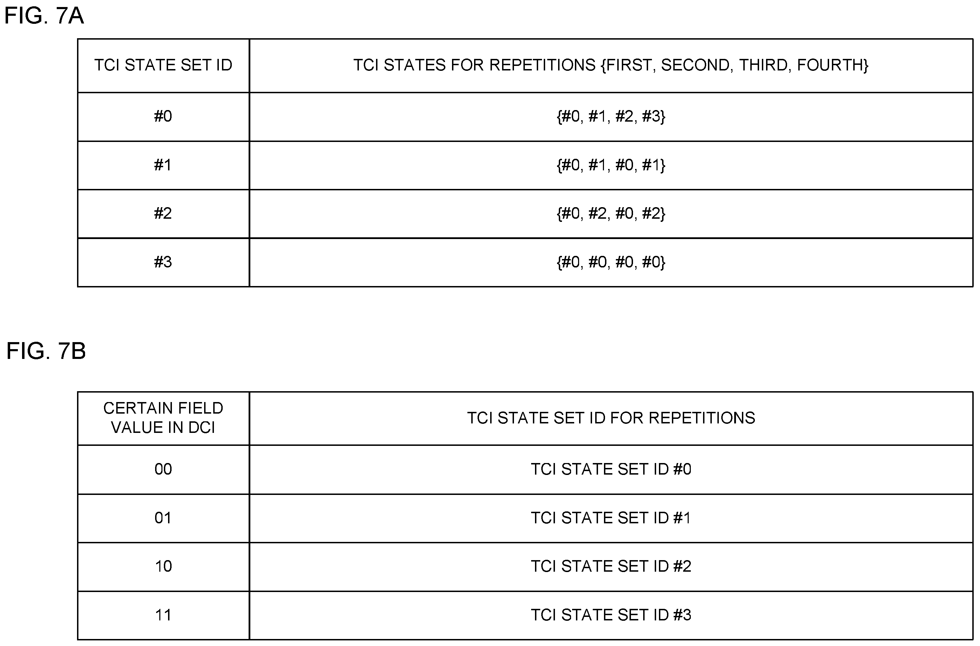

FIGS. 7A and 7B are diagrams to show an example of correspondence between certain field values in DCI and the TCI state sets according to the first example in the fourth aspect. The number of bits, the number of repetitions, and the like shown in FIGS. 7A and 7B are merely examples, and the present disclosure is not limited to these.

FIG. 7A shows four TCI state sets corresponding to TCI state set IDs #0 to #3 configured by higher layer signaling (e.g., RRC signaling). For example, TCI state set ID #0 indicates that TCI states #0, #1, #2, and #3 correspond to the first, second, third, and fourth repetition of the PDSCH, respectively.

FIG. 7B shows an example of correspondence between values of the certain field (e.g., a TCI field) in DCI and the TCI state set IDs. Although FIG. 7B shows an example in which the values "00" to "11" correspond to TCI state sets #0 to #3, respectively, the present disclosure is not limited to this. For example, the values "00" to "11" may correspond to TCI state sets #2, #1, #0, and #3, respectively.

The correspondence between the values of the certain field (e.g., a TCI field) in DCI and the TCI state set IDs may be configured by RRC signaling. The correspondence may be obtained by activating/deactivating, using MAC signaling (e.g., a MAC CE), one or a plurality of pieces of correspondence out of those configured by the RRC signaling. In other words, the TCI state sets in FIG. 7B may be interpreted as the TCI state sets configured by the higher layer signaling, or may be interpreted as the TCI state sets activated by the MAC CE.

### <Second Example>

In a second example, when the scheduling offset according to repetitions of transmission of the PDSCH is less than the time length for QCL, a certain TCI state set corresponding to a certain TCI field value is applied to the repetitions of the transmission of the PDSCH. Note that the TCI state set may be a set that is associated with a TCI state set ID as described in the first example, or may be a set that is not associated with a TCI state set ID as described in FIG. 4A.

In other words, when the scheduling offset according to repetitions of transmission of the PDSCH is less than the time length for QCL, the UE may assume a TCI state for the repetitions of the transmission of the PDSCH on the basis of the certain TCI field value instead of a value of the TCI field included in DCI to schedule the PDSCH.

Here, the certain TCI field value may be, for example, "0" (or "00" and the like), an arbitrary value defined by a specification, or a specific value configured by the higher layer signaling.

### <Third Example>

In a third example, a case where the scheduling offset with respect to the first N pieces (e.g., two pieces) of repetitions out of PDSCH repetitions (e.g., 4 repetitions) is less than the time length for QCL, whereas the scheduling offset with respect to repetitions after the first N pieces of repetitions is equal to or greater than the time length for QCL will be described.

In this case, the UE may control in accordance with at least one of (A) and (B) as follows:
(A) all repetitions follows the first example or the second example as mentioned above, and
(B) repetitions in which the scheduling offset is less than the time length for QCL follows the first example or the second example as mentioned above or a default QCL assumption of Rel-15 NR (QCL assumption corresponding to the lowest CORESET-ID in the latest slot), and repetitions in which the offset is greater than the time length for QCL is applied with a TCI state (or a set of the TCI states) specified by a TCI field in DCI to schedule the repetitions of the PDSCH.

Note that when the above-mentioned condition (2) that the repetitions of the PDSCH is scheduled by DCI format 1_0 or the above-mentioned condition (3) that the TCI presence information is not set to "enabled" (TCI presence information is not configured) with respect to a CORESET to schedule the repetitions of the PDSCH is satisfied, the UE may assume that the control is consistently in accordance with the first example or the second example as mentioned above.

According to the third example described above, for example, flexible processing, such as changing a TCI state assumption in the middle of repetitions while maintaining the existing Rel-15 NR specifications as much as possible, is available.

### <Fourth Example>

In a fourth example, the UE controls a TCI state assumption for repetitions of the PDSCH on the basis of UE capability.

The UE capability may be, for example, a beam switching-related capability (referred to as a beam switching capability), or may be the number of beam switches to be supported for each certain period (e.g., 1 slot, a certain number of slots, or certain seconds). Although the UE capability will be hereinafter described as the beam switching capability, the present disclosure is not limited to this. Note that a switch of the present disclosure may be interpreted as a change, an adjustment, a sweep, and so on.

In this case, the UE may apply different TCI states (may use switched TCI states) in PDSCH repetitions until a repetition corresponding to an upper limit on the number of times for the beam switching capability, and may assume that a TCI state is not switched (an identical TCI state is applied) after the repetition.

For example, in a case where the beam switching capability is once, when the PDSCH with TCI state set ID # 0 for the number of repetitions "4" shown in FIG. 7A is scheduled for the UE, the UE may apply TCI state #0 in the first repetition, apply TCI state #1 in the second repetition, and apply TCI state #1 identical to that in the second repetition from the third repetition.

The UE with the beam switching capability being N times may select a TCI state set for the number of TCI state switches being N times at most (may use the TCI state set as a default TCI state set) even when a TCI state set for the number of TCI state switches being over N times is configured or specified with respect to PDSCH repetitions. For example, the UE with the beam switching capability being twice may select a set (e.g., {#0, #1, #1, #2}) for fitting the number of beam switches into twice as the default TCI state set.

The UE may select a set for the least beam switches (a set (e.g., {#0, #0, #1, #1}) for fitting the number of beam switches into once) as the default TCI state set.

The UE may select the TCI state set for the number of switches being N times at most from all configured TCI state sets, from TCI state sets corresponding to a TCI field value in DCI (e.g., TCI state sets corresponding to TCI state sets #0 to #3 in a case of FIG. 7B), or from a default TCI state set group.

The default TCI state set group may be configured for the UE by using RRC signaling, MAC signaling (MAC CE and the like), or a combination of these, or may be determined by a specification.

The UE with the beam switching capability being N times may assume that a TCI state set for the number of TCI state switches being over N times is not configured or specified with respect to PDSCH repetitions. A network (base station) may control the UE with the beam switching capability being N times so as not to configure or specify the TCI state set for the number of TCI state switches being over N times.

### <Fifth Example>

In the first to fourth examples of the fourth aspect, TCI state switching according to PDSCH repetitions is described, but the TCI state may be interpreted as another parameter (e.g., an RV or a Modulation and Coding Scheme (MCS)). Although the following description gives an example of the RV as such another parameter, the present disclosure is not limited to this.

For example, a TCI state (or TCI) in the first to fourth examples of the fourth aspect may be interpreted as the RV. For example, the RV may be a value fixed during repetitions of transmission, or may be specified by DCI.

The TCI state and the RV for repetitions of transmission may be represented (jointly specified) by the same field in one piece of DCI, or may be represented (individually specified) by separate fields in one piece of DCI. The TCI state for repetitions of transmission may be specified by DCI, whereas the RV may be fixed by a specification.

The time length for QCL for the RV may not be defined, may be assumed to be the same as that for the TCI, or may be configured separately from that for the TCI.

When the time length for QCL for the RV is not defined, the UE may apply, regardless of the scheduling offset from DCI until repetitions of the PDSCH, the RV specified by the DCI to the repetitions of the PDSCH.

When the scheduling offset according to repetitions of transmission of a PDSCH to be scheduled is less than the time length for QCL for the RV, the UE may apply a default RV set (e.g., {0, 3, 0, 3}) to the repetitions of the transmission of the PDSCH. The default RV set may be an RV set corresponding to a specific RV set ID (e.g., the lowest ID or the highest ID) (see the above-mentioned first example), or may be an RV set corresponding to a certain RV field value (see the above-mentioned second example).

With respect to the control in the third example, different control may be used for the TCI and for the RV.

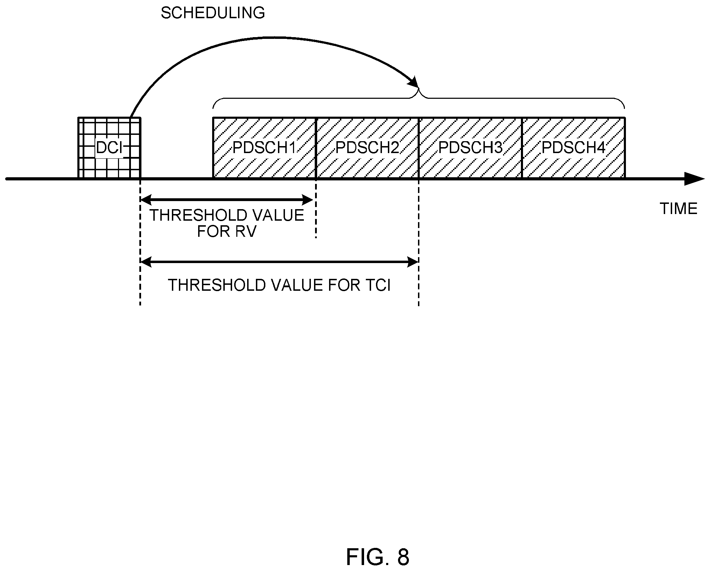

FIG. 8 is a diagram to show an example of a fifth example in the fourth aspect. In the present example, repetitions of the PDSCH (PDSCHs 1 to 4) with the number of repetitions "4" are scheduled by DCI. A threshold value for the RV (time length for QCL for the RV) is a period from just on the end of the DCI until a start of PDSCH 2, and a threshold value for the TCI (time length for QCL for the TCI state) is a period from just on the end of the DCI until a start of PDSCH 3.

In the present example, the UE assumes use of the control (B) with respect to the TCI and use of the control (A) with respect to the RV. Note that the assumption of the present disclosure is not limited to this. The UE assumes that the default RV set is {0, 3, 0, 3} and the default TCI state set is {#0, #1, #1, #2}.

The UE assumes that RV set {0, 2, 3, 1} and TCI state se {#2, #3, #1, #0} are specified by the DCI. In the present example, the UE may apply the default RV set to all PDSCH repetitions with respect to the RV. The UE may apply the default TCI state set to PDSCHs 1 and 2 with respect to the TCI, and subsequently may apply a specified TCI state.

Accordingly, in the present example, the UE may apply {0, 3, 0, 3} as the RV and {#0, #1, #1, #0} as the TCI to the PDSCH repetitions.

Note that when a rule of the TCI switching and RV switching (e.g., control in a case where the time length for QCL is exceeded), the time length for QCL, and the like are the same, suppression of degradation of PDSCH reception performance can be expected. This is because it is assumed that a combination of the TCI and RV originally configured by the network can achieve preferable reception.

On the other hand, when the rule of the TCI switching and RV switching, the time length for QCL, and the like are different from each other, control with more flexibility is available. This is because it is conceivable that although the TCI state switching takes a relatively long time since the TCI state switching corresponds to beam switching, the RV switching is performed in a relatively short time, and thus both of the TCI state switching and RV switching may not be matched.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

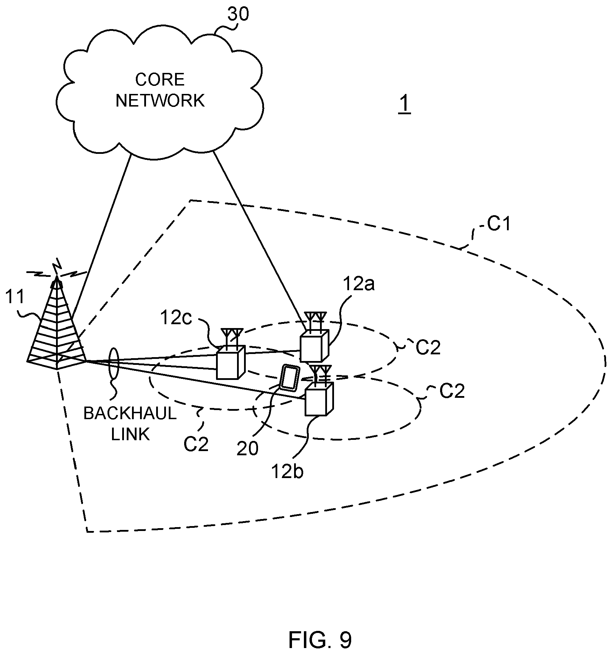

FIG. 9 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6GHz or less (sub-6GHz), and FR2 may be a frequency band which is higher than 24GHz (above-24GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

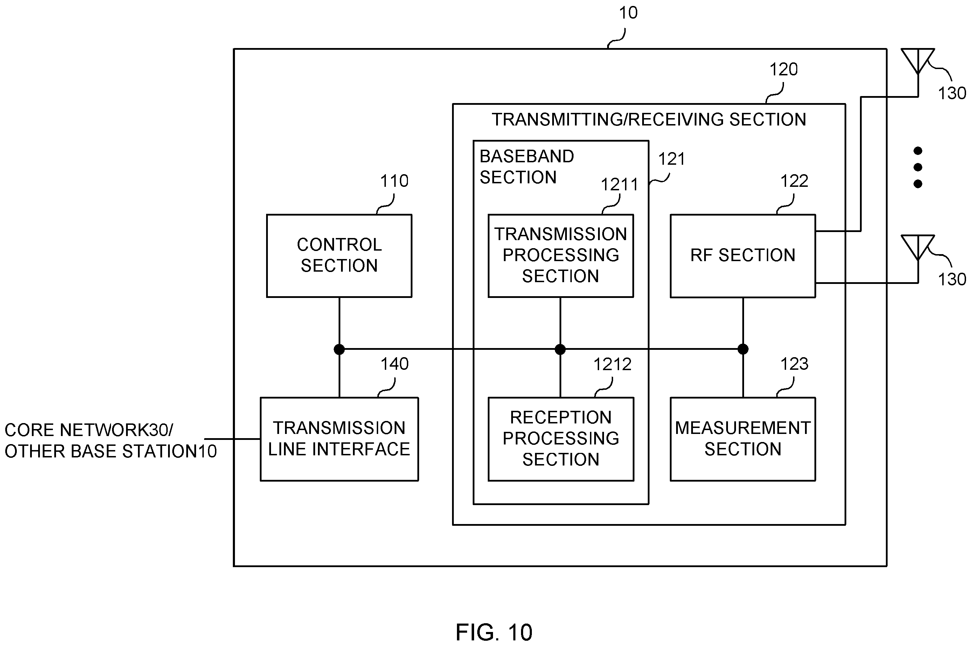

FIG. 10 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

Note that the transmitting/receiving section 120 may transmit downlink control information (DCI), (DL assignment and the like) for scheduling of a downlink shared channel (e.g., a PDSCH).

When performing repetitions of transmission of the downlink shared channel, the transmitting/receiving section 120 may transmit the PDSCH with respect to at least a part of the repetitions. The transmitting/receiving section 103 may transmit DCI used for scheduling of all repetitions of the downlink shared channel. The transmitting/receiving section 120 may transmit DCI used for scheduling of repetitions of the downlink shared channel for each certain number of repetitions.

The control section 110 may control repetitions of transmission of the downlink shared channel. Specifically, the control section 110 may control transmission of the PDSCH from different transmission and reception points for each certain number of repetitions.

The control section 110 may control at least one of generation and transmission of DCI used for scheduling of all repetitions of the downlink shared channel. The control section 301 may control at least one of generation and transmission of DCI used for scheduling of repetitions of the downlink shared channel for each certain number of repetitions.

### (User Terminal)

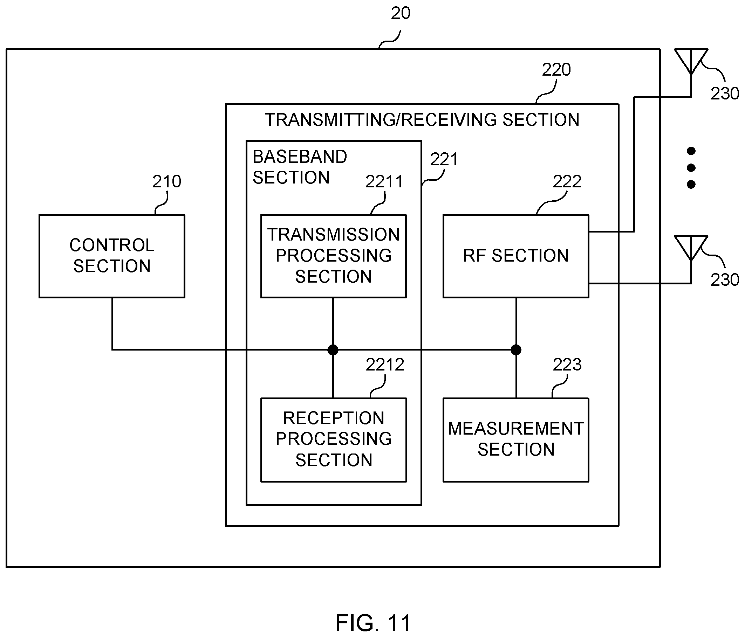

FIG. 11 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

Note that when performing repetitions of transmission of the downlink shared channel, the transmitting/receiving section 220 may receive the downlink shared channel from different transmission and reception points for each certain number of repetitions. The transmitting/receiving section 220 may receive DCI used for scheduling of all repetitions of the downlink shared channel. The transmitting/receiving section 220 may receive DCI used for scheduling of repetitions of the downlink shared channel for each certain number of repetitions.

The control section 210 may control reception of DCI used for scheduling of all repetitions of the PDSCH. The control section 210 may control reception of DCI used for scheduling of repetitions of the PDSCH for each certain number of repetitions.

The control section 210 may control, on the basis of a transmission configuration indication (TCI) state associated with a certain number of repetitions or a redundancy version of a downlink shared channel transmitted from a plurality of different transmission and reception points for each certain number of the repetitions, reception of the downlink shared channel.

The control section 210 may assume that one or more antenna ports for a demodulation reference signal for the downlink shared channel are quasi co-located with a downlink reference signal indicated by the TCI state.

The control section 210 may control reception of downlink control information used for scheduling of all repetitions of the downlink shared channel. A certain field value in the downlink control information may indicate the TCI state for each the repetition or for each the redundancy version. The certain field value or another field value in the downlink control information may indicate the number of the all repetitions.

The control section 210 may control reception of downlink control information used for scheduling of repetitions of the downlink shared channel for each certain number of repetitions. A certain field value in the downlink control information may indicate the TCI state for each certain number of repetitions. Another field value in the downlink control information may indicate the redundancy version for each certain number of repetitions.

The transmitting/receiving section 220 may receive, on the basis of downlink control information (DCI), a downlink shared channel repetitively transmitted (PDSCH repetitions).

In a case where a period (scheduling offset) from reception of the downlink control information until reception of the downlink shared channel is less than a certain threshold value (time length for QCL), the control section 210 may control a TCI state for repetitions of the downlink shared channel (in other words, for each repetition) on the basis of a specific set out of sets of configured transmission configuration indication states (TCI states). The control section 210 may assume, on the basis of the specific set, that TCI states for each repetition of the downlink shared channel are different from each other.

For example, the control section 210 may judge that the specific set is a TCI state set corresponding to a certain TCI state set identifier (ID), (e.g., a TCI state set ID = 0). The control section 210 may judge that the specific set is a TCI state set corresponding to a case where a field to specify a TCI state of the downlink control information indicates a certain value (e.g., a TCI state field = 0).

With respect to certain repetitions of the downlink shared channel, in a case where a period from reception of the downlink control information until the repetitions is equal to or greater than a certain threshold value, the control section 210 may control a TCI state for the repetitions on the basis of a TCI state set corresponding to a value of a field to specify a TCI state of the downlink control information.

The control section 210 may perform control so as to permit TCI state switching for repetitions of the downlink shared channel until the number of times indicated by a beam switching-related capability of the user terminal 20 and so as not to permit the TCI state switching for repetitions exceeding the number of the times. Note that the number of the permitted times the TCI state is switched may be counted including switching from a TCI state for a PDCCH to schedule the PDSCH to a TCI state for the first repetitions of the PDSCH, or may be counted without including the switching.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

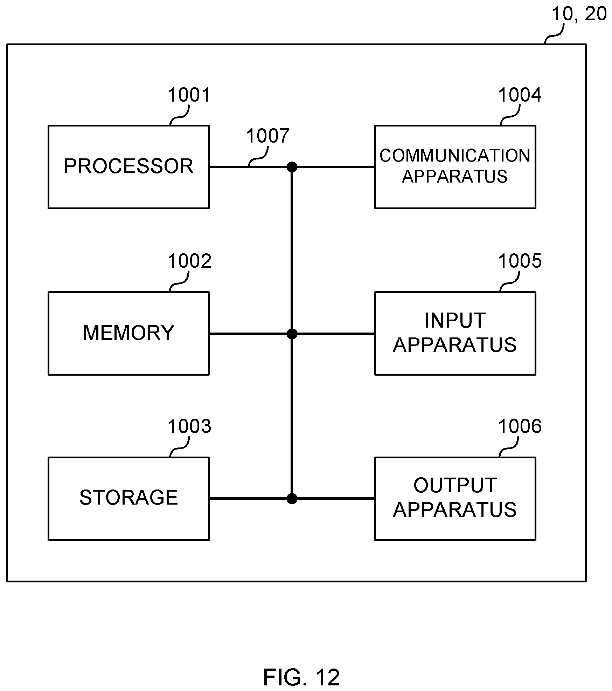

For example, a base station, a user terminal, and so on according to one embodiment of the present disclosure may function as a computer that executes the processes of the radio communication method of the present disclosure. FIG. 12 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a certain signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of certain information (for example, reporting of "X holds") does not necessarily have to be reported explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a mobile body or a mobile body itself, and so on. The mobile body may be a vehicle (for example, a car, an airplane, and the like), may be a mobile body which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-to-terminal communication (for example, "side"). For example, an uplink channel, a downlink channel and so on may be interpreted as a side channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be reordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the scope of the invention defined by the recitations of claims. Consequently, the description of the present disclosure is provided only for the purpose of explaining examples, and should by no means be construed to limit the invention according to the present disclosure in any way.

## Claims

1. A terminal (20) comprising:
a receiving section (220) configured to receive downlink control information, DCI, for scheduling a repetitively transmitted physical downlink shared channel, PDSCH; and
a control section (210) configured to determine a transmission configuration indication, TCI, state for each of repetitions of the repetitively transmitted PDSCH on the basis of a specific set out of one or more sets each indicating TCI states, when an offset between reception of the DCI and a first repetition of the repetitions of the repetitively transmitted PDSCH is less than a threshold value and an offset between the reception of the DCI and a repetition after the first repetition of the repetitions of the repetitively transmitted PDSCH is equal to or greater than the threshold value.

2. The terminal (20) according to claim 1, wherein the control section (210) is configured to determine that the specific set out of the one or more sets is such a set that a field to specify the TCI state included in the DCI indicates a lowest value.

3. A radio communication method for a terminal (20), comprising:
receiving downlink control information, DCI, for scheduling a repetitively transmitted physical downlink shared channel,(PDSCH; and
determining a transmission configuration indication, TCI, state for each of repetitions of the repetitively transmitted PDSCH on the basis of a specific set out of one or more sets each indicating TCI states, when an offset between reception of the DCI and a first repetition of the repetitions of the repetitively transmitted PDSCH is less than a threshold value and an offset between the reception of the DCI and a repetition after the first repetition of the repetitions of the repetitively transmitted PDSCH is equal to or greater than the threshold value.

4. A system (1) comprising: a terminal (20) according to any of claims 1 or 2 and a base station (10) comprising a transmitting section (120) configured to transmit the DCI to the terminal (20).

## Patentansprüche

1. Endgerät (20), umfassend:
einen Empfangsabschnitt (220), der so konfiguriert ist, dass er Downlink-Steuerinformationen, DCI, zum Planen eines wiederholt übertragenen physischen Downlink-Shared-Channel, PDSCH, empfängt; und
einen Steuerabschnitt (210), der konfiguriert ist, um einen Übertragungskonfigurationsanzeigen-, TCI-, Zustand für jede der Wiederholungen des wiederholt übertragenen PDSCH auf der Grundlage eines spezifischen Satzes aus einem oder mehreren Sätzen, die jeweils TCI-Zustände anzeigen, zu bestimmen, wenn eine Versatzzeit zwischen dem Empfang der DCI und einer ersten Wiederholung der Wiederholungen des wiederholt übertragenen PDSCH weniger als ein Schwellenwert ist und eine Versatzzeit zwischen dem Empfang der DCI und eine Wiederholung nach der ersten Wiederholung der Wiederholungen der wiederholt übertragenen PDSCH gleich oder größer als der Schwellenwert ist.

2. Endgerät (20) nach Anspruch 1, wobei der Steuerabschnitt (210) so konfiguriert ist, dass er bestimmt, dass der spezifische Satz aus den einem oder den mehreren Sätzen ein derartiger Satz ist, dass ein Feld zum Angeben des TCI-Zustands, das in den DCI enthalten ist, einen niedrigsten Wert angibt.

3. Funkkommunikationsverfahren für ein Endgerät (20), umfassend:
Empfangen von Downlink-Steuerungsinformationen, DCI, zum Planen eines wiederholt übertragenen physischen Downlink-Shared-Channel, PDSCH; und
Bestimmen eines Übertragungskonfigurationsanzeigen-, TCI-, Zustands für jede der Wiederholungen des wiederholt übertragenen PDSCH auf der Grundlage eines spezifischen Satzes aus einem oder mehreren Sätzen, die jeweils TCI-Zustände anzeigen, wenn eine Versatzzeit zwischen dem Empfang der DCI und einer ersten Wiederholung der Wiederholungen des wiederholt übertragenen PDSCH kleiner als ein Schwellenwert ist und eine Versatzzeit zwischen dem Empfang der DCI und einer Wiederholung nach der ersten Wiederholung der Wiederholungen des wiederholt übertragenen PDSCH gleich oder größer als der Schwellenwert ist.

4. System (1), umfassend: ein Endgerät (20) nach einem der Ansprüche 1 oder 2 und eine Basisstation (10), die einen Sendeabschnitt (120) umfasst, der so konfiguriert ist, dass er die DCI an das Endgerät (20) sendet.

## Revendications

1. Terminal (20) comprenant :
une section de réception (220) configurée pour recevoir des informations de commande de liaison descendante, DCI, pour une programmation d'un canal partagé physique en liaison descendante, PDSCH, transmis de manière répétitive ; et
une section de commande (210) configurée pour déterminer un état d'indication de configuration de transmission, TCI, pour chacune des répétitions du PDSCH transmis de manière répétitive sur la base d'un ensemble spécifique parmi un ou plusieurs ensembles indiquant chacun des états TCI, lorsque un décalage entre une réception des DCI et une première répétition parmi les répétitions du PDSCH transmis de manière répétitive est inférieur à une valeur seuil et un décalage entre la réception des DCI et une répétition après la première répétition parmi les répétitions du PDSCH transmis de manière répétitive est supérieur ou égal à la valeur seuil.

2. Terminal (20) selon la revendication 1, dans lequel la section de commande (210) est configurée pour déterminer que l'ensemble spécifique parmi les un ou plusieurs ensembles est un ensemble tel qu'un champ pour spécifier l'état de TCI inclus dans les DCI indique une valeur la plus faible.

3. Procédé de communication radio pour un terminal (20), comprenant :
une réception d'informations de commande de liaison descendante, DCI, pour une programmation d'un canal partagé physique en liaison descendante, PDSCH, transmis de manière répétitive ; et
une détermination d'un état d'indication de configuration de transmission, TCI, pour chacune des répétitions du PDSCH transmis de manière répétitive sur la base d'un ensemble spécifique parmi un ou plusieurs ensembles indiquant chacun des états TCI, lorsqu'un décalage entre une réception des DCI et une première répétition parmi les répétitions du PDSCH transmis de manière répétitive est inférieur à une valeur seuil et un décalage entre la réception des DCI et une répétition après la première répétition parmi les répétitions du PDSCH transmis de manière répétitive est supérieur ou égal à la valeur seuil.

4. Système (1) comprenant : un terminal (20) selon l'une quelconque des revendications 1 ou 2 et une station de base (10) comprenant une section de transmission (120) configurée pour transmettre les DCI au terminal (20).
